(19) **Europäisches Patentamt / European Patent Office / Office européen des brevets**

(11) **EP 4 539 144 A1**

(12) **EUROPEAN PATENT APPLICATION**
published in accordance with Art. 153(4) EPC

(43) Date of publication:
**16.04.2025 Bulletin 2025/16**

(21) Application number: **23907530.2**

(22) Date of filing: **08.12.2023**

(51) International Patent Classification (IPC):
$H01M\ 4/134^{(2010.01)}$ $H01M\ 4/62^{(2006.01)}$
$H01M\ 4/38^{(2006.01)}$ $H01M\ 4/48^{(2010.01)}$
$H01M\ 4/587^{(2010.01)}$ $H01M\ 4/583^{(2010.01)}$
$H01M\ 10/0525^{(2010.01)}$ $H01M\ 4/02^{(2006.01)}$

(52) Cooperative Patent Classification (CPC):
H01M 4/02; H01M 4/134; H01M 4/38; H01M 4/48;
H01M 4/583; H01M 4/587; H01M 4/62;
H01M 10/0525; Y02E 60/10

(86) International application number:
**PCT/KR2023/020232**

(87) International publication number:
**WO 2024/136244 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 KR 20220183268**

(71) Applicant: **LG Energy Solution, Ltd.
Seoul 07335 (KR)**

(72) Inventors:
• **KO, Minjin**
**Daejeon 34122 (KR)**
• **KWON, Yohan**
**Daejeon 34122 (KR)**
• **LEE, Jaewook**
**Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE SLURRY, NEGATIVE ELECTRODE INCLUDING SAME, AND LITHIUM SECONDARY BATTERY**

(57)    The present specification pertains to: a negative electrode slurry containing a negative electrode active material, single walled carbon nanotubes (SWCNT), an organic binder, and an organic solvent; a negative electrode including same; and a lithium secondary battery. This negative electrode slurry contains a negative electrode active material using silicon-based particles having high charge/discharge capacity, generates little hydrogen gas during the production and storage of the slurry, and yields excellent capacity retention during charge and discharge.

**EP 4 539 144 A1**

**Description**

[Technical Field]

This application claims priority to and the benefit of Korean Patent Application No. 10-2022-0183268 filed in the Korean Intellectual Property Office on December 23, 2022, the entire contents of which are incorporated herein by reference.

The present specification relates to a negative electrode slurry, a negative electrode including the same, and a lithium secondary battery.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

Meanwhile, as technology development of and demand for mobile devices have increased, demands for secondary batteries have been rapidly increased. Accordingly, lithium secondary batteries having characteristics of high energy density and voltage, long cycle life, and low self-discharge rate have been commercialized and widely used. Accordingly, as an electrode for a high capacity lithium secondary battery, studies have been actively conducted in order to prepare an electrode having a high energy density per unit volume.

Generally, a secondary battery is composed of a positive electrode, a negative electrode, an electrolyte, and a separator, and in particular, the negative electrode includes a negative electrode active material, and silicon-based particles with large charge and discharge capacities may be used as the negative electrode active material.

In particular, recently, in response to the demand for a secondary battery having an electrode with a high energy, studies have been actively conducted on a method for increasing the capacity by together using a silicon-based compound such as Si/C or SiOx (0 < x < 2), which has a 10-fold higher capacity than a graphite-based material, as a negative electrode active material. However, compared to existing graphite-based materials, silicon-based compounds have a problem in that when the silicon-based compound is stored in a slurry state, hydrogen gas is generated due to an oxidation reaction with water, and the volume expands during charging and discharging to block the conductive path, thereby causing the battery characteristics to deteriorate.

In order to solve the above-mentioned problems, studies have also been conducted on the composition of binders, and as a result, studies have been conducted on binder polymers having strong stress. However, these binder polymers alone have limitations in preventing an increase in electrode thickness due to contraction and expansion of a negative electrode active material and a deterioration in the performance of a lithium secondary battery derived therefrom. Further, in order to solve the aforementioned problem caused by the volume expansion of a negative electrode having a silicon-based active material, an aqueous binder with high dispersibility is used.

In addition, in order to secure the conductivity of the negative electrode, the secondary battery further includes a conductive material. Although carbon black and the like have been mainly used in the related art, single-walled carbon nanotubes (SWCNTs) with a thin and elongated shape have been used in order to improve the capacity of the secondary battery. Typically, a negative electrode slurry is prepared using a dispersion in which the single-walled carbon nanotubes are completely dispersed, and a negative electrode active material layer is prepared using the negative electrode slurry. However, when the single-walled carbon nanotubes are completely dispersed, there is a problem in that a carbon nanotube structure cannot be easily formed. Recently, a method of alleviating the problem has been mentioned in which the single-walled carbon nanotubes are linearly dispersed in a dispersion medium at a certain level so that most of the single-walled carbon nanotubes are present as carbon nanotube structures.

However, when the single-walled carbon nanotubes are linearly dispersed in a dispersion medium at a certain level, there is a problem in that the carbon nanotube structure is not maintained in an aqueous system including an aqueous binder.

Therefore, various methods have been discussed to solve the above problems, and as one method among them, research on a negative electrode binder has been discussed.

[Detailed Description of the Invention]

[Technical Problem]

The present inventors found that the above-described problems can be solved by implementing a negative electrode slurry in which a silicon-based active material with a large charge/discharge capacity is used as a negative electrode active material, a pre-dispersion in which single-walled carbon nanotubes are linearly dispersed in a dispersion medium is used as a conductive material, and an organic-based binder is used such that a carbon nanotube structure implemented by the pre-dispersion may be maintained.

Furthermore, the present inventors confirmed that by using N-methyl-2-pyrrolidinone (NMP) as the dispersion medium, the carbon nanotube structure was more easily maintained and the phase stability with the binder was improved.

Accordingly, the present specification has been made in an effort to provide a negative electrode slurry including the above technical features, a negative electrode including the same, and a lithium secondary battery.

[Technical Solution]

An exemplary embodiment of the present specification provides a negative electrode slurry including: a negative electrode active material; single-walled carbon nanotubes (SWCNTs); an organic-based binder; and an organic solvent, in which the negative electrode slurry includes a pre-dispersion in which the single-walled carbon nanotubes are dispersed in N-methyl-2-pyrrolidinone (NMP).

Further, an exemplary embodiment of the present specification provides a negative electrode including: a current collector layer; and a negative electrode active material layer provided on one surface or both surfaces of the current collector layer, in which the negative electrode active material layer includes the negative electrode slurry or a dried material thereof.

Finally, an exemplary embodiment of the present specification provides a lithium secondary battery including: a first electrode; a second electrode; a separator interposed between the first electrode and the second electrode; and an electrolyte, in which any one of the first electrode and the second electrode is the negative electrode.

[Advantageous Effects]

The negative electrode slurry according to the present application prevents the generation of hydrogen gas using an organic solvent to prevent hydrogen gas from being generated by an oxidation reaction with water in a slurry state containing a silicon compound. In addition, since the dispersion stability of SWCNTs dispersed in NMP is excellent compared to SWCNTs dispersed in water, the conductive connectivity of the electrodes is excellent, so that the cycle characteristics thereof are excellent due to the excellent connectivity of the conductive network during charging and discharging.

Therefore, the negative electrode slurry according to the present application has a large charging and discharging capacity, generates a small amount of hydrogen gas during the preparation and storage of the slurry, can maintain a conductive path by maintaining the carbon nanotube structure during the repeated charging and discharging process, and has excellent phase stability.

Furthermore, a negative electrode including the negative electrode slurry has a high energy density per unit volume and has improved conductivity.

Further, a secondary battery including the negative electrode has high energy density and voltage, and thus provides an effect of improving capacity, having a long cycle life, and having a low self-discharge rate.

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present application, the particle size or particle diameter may mean the average diameter or representative diameter of each grain forming a metal powder.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail, such that a person with ordinary skill in the art to which the present invention pertains can easily carry out the present invention. However, the present invention can be implemented in various different forms, and is not limited to the following description.

**<Negative electrode slurry>**

An exemplary embodiment of the present specification provides a negative electrode slurry including: a negative electrode active material; single-walled carbon nanotubes (SWCNTs); an organic-based binder; and an organic solvent, in which the negative electrode slurry includes a pre-dispersion in which the single-walled carbon nanotubes are dispersed in N-methyl-2-pyrrolidinone (NMP).

Since the negative electrode slurry according to the present application includes the organic-based binder and the pre-dispersion containing single-walled carbon nanotubes, the negative electrode slurry has excellent carbon nanotube negative electrode slurry phase stability compared to an aqueous system including an aqueous binder, so that the negative electrode slurry has excellent conductive network connectivity during the repeated charging and discharging process, and generates a small amount of hydrogen gas during the preparation and storage of the slurry.

In the present specification, the organic-based binder serves to capture the negative electrode active material and/or the conductive material in order to prevent the distortion and structural deformation of the negative electrode structure during the volume expansion and relaxation of the negative electrode active material. In addition, the organic-based binder has excellent compatibility with single-walled carbon nanotubes compared to aqueous binders, and thus may maintain phase stability. In the present specification, the organic-based binder is a polymer which can be dissolved in an organic solvent, and is not particularly limited as long as it satisfies an organic-based binder which plays such a role.

In the present specification, a mixing method for forming the negative electrode slurry is not particularly limited, examples thereof include a ball mill, a sand mill, a pigment disperser, an ultrasonic disperser, a homogenizer, a planetary mixer, a Hobart mixer, and the like, and it is preferable to perform kneading using a homogenizer and/or a planetary mixer, as appropriate.

In an exemplary embodiment of the present invention, the negative electrode active material may include one or more selected from the group consisting of a silicon-based active material and a carbon-based active material.

In an exemplary embodiment of the present specification, the electrode active material may be composed of a mixture of a silicon-based active material and a carbon-based active material.

In the present specification, the silicon-based active material has a 10-fold higher capacity than the carbon-based active material, and accordingly, when the silicon-based active material is applied to an electrode, particularly a negative electrode, it is possible to implement an electrode with a higher level of energy density even with a thinner thickness than when the carbon-based active material is included alone.

In another exemplary embodiment of the present specification, when the electrode active material is composed of a silicon-based active material and a carbon-based active material, the composition ratio between the silicon-based active material and the carbon-based active material may be in a range of 2 : 98 to 30 : 70.

The electrode active material according to the exemplary embodiment includes a carbon-based active material as a main component, and thus may further provide an effect in which swelling slightly occurs due to the small volume expansion of the active material during charging and discharging and the conductive connectivity of the electrode is excellent.

In an exemplary embodiment of the present specification, the silicon-based active material may include one or more selected from the group consisting of $SiO_x$ (x=0), $SiO_x$ (0<x<2), SiC, and a Si alloy.

In the present specification, the electrode active material includes silicon particles, which may be present, for example, in a crystalline or amorphous form. Specifically, the silicon particles may be preferably spherical particles, but are not limited thereto.

In the present specification, the case of $SiO_2$ where x is 2 in the SiOx is not included, but this $SiO_2$ does not react with lithium ions, and thus cannot store lithium. Therefore, it is preferred that x falls within the range of the exemplary embodiment.

In the present specification, the silicon-based active material may be Si/C composed of a composite of Si and C, or Si.

In the present specification, two or more of the silicon-based active materials may be used in mixture.

In an exemplary embodiment of the present specification, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In the negative electrode slurry, when the content of the silicon-based active material satisfies the above range, the binder and the conductive material may effectively bind the silicon active material and smoothly maintain conductive connectivity between the active materials.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present specification, for the silicon-based active material, particularly, pure silicon (Si) may be used as the silicon-based active material. The use of pure silicon (Si) as the silicon-based active material may mean that based on the total 100 parts by weight of the silicon-based active material, pure Si particles (SiOx (x=0)), which are not bound to other particles or elements, are included in the above range.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the repeated charging and discharging process.

Therefore, the present invention has solved the existing problems by preparing a negative electrode pre-dispersion to improve the dispersibility of carbon nanotubes and enhancing the bonding to the active material in order to solve the aforementioned problems while using only the silicon-based active material as a negative electrode active material in order to improve the capacity.

Meanwhile, the silicon-based active material of the present invention may have an average particle diameter (D50) of 3 $\mu$m to 10 $\mu$m, specifically 3.5 $\mu$m to 8 $\mu$m, and more specifically 3.5 $\mu$m to 7 $\mu$m. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a negative electrode binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present application, the silicon-based active material generally has a characteristic BET specific surface area. The BET specific surface area of the silicon-based active material is preferably 0.01 to 150.0 $m^2$/g, more preferably 0.1 to 100.0 $m^2$/g, particularly preferably 0.2 to 80.0 $m^2$/g, and most preferably 0.2 to 18.0 $m^2$/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present specification, the carbon-based active material may include one or more selected from the group consisting of artificial graphite, natural graphite, hard carbon, and soft carbon.

In the present specification, the negative electrode composition in the negative electrode slurry means the negative electrode active material, the conductive material, and the organic-based binder except for the (organic) solvent, and may be referred to as the solid content of the negative electrode slurry in some cases.

In an exemplary embodiment of the present application, provided is a negative electrode composition in which the silicon-based active material is present in an amount of 60 parts by weight or more based on 100 parts by weight of the solid content of the negative electrode slurry.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, based on 100 parts by weight of the solid content of the negative electrode slurry.

The negative electrode slurry according to the present application has a feature in which by using a specific conductive material and a specific negative electrode binder capable of improving the volume expansion rate in the repeated charging and discharging process even though a silicon-based active material having a remarkably high capacity is used in the above range, the performance of the negative electrode does not deteriorate and output characteristics at charging and discharging are excellent even though the above range is included.

In an exemplary embodiment of the present application, the silicon-based active material may have a non-circular form, and the circularity thereof is, for example, 0.9 or less, for example 0.7 to 0.9, for example, 0.8 to 0.9, or for example, 0.85 to 0.9.

In the present application, the circularity is determined by the following Equation 1, where A is the area and P is the boundary line.

[Equation 1]

$$4\pi A/P^2$$

In an exemplary embodiment of the present specification, the pre-dispersion may include 0.4 parts by weight or more of the single-walled carbon nanotubes with respect to 100 parts by weight of N-methyl-2-pyrrolidinone (NMP).

In an exemplary embodiment of the present specification, the pre-dispersion may include 1 part by weight or more of the single-walled carbon nanotubes with respect to 100 parts by weight of N-methyl-2-pyrrolidinone (NMP).

In the present specification, the pre-dispersion may further include a dispersant. The dispersant allows single-walled carbon nanotubes to be smoothly mixed with a dispersion medium such as NMP during the preparation of a conductive mixture such as the pre-dispersion, and may improve the dispersibility of carbon nanotubes in a conductive material dispersion prepared using the conductive mixture.

In another exemplary embodiment of the present invention, the dispersant may include at least one selected from the group consisting of hydrogenated nitrile butadiene rubber (H-NBR), polyvinylpyrrolidone (PVP), polyvinylidene fluoride (PVdF), and polyvinyl butyral (PVB). Specifically, the dispersant may be hydrogenated nitrile butadiene-based rubber or PVdF.

In still another exemplary embodiment of the present invention, the dispersant may be included in a content of 10 wt% or more and 500 wt% or less, specifically, 20 wt% or more, or 50 wt% or more, or 300 wt% or less, or 200 wt% or less, based on the weight of the single-walled carbon nanotubes. When the above range is satisfied, single-walled carbon nanotubes may be smoothly dispersed in NMP.

The single-walled nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the single-walled carbon nanotube unit, a graphite sheet has a cylindrical shape with a nano-sized diameter and has an $sp^2$ bond structure. In this case, the carbon nanotube unit may exhibit characteristics of a conductor or semiconductor depending on a structure and an angle at which the graphite sheet is roll-pressed. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

Although a dotted conductive material, a planar conductive material, and/or a linear conductive material have/has been used as a conductive material in the negative electrode slurry in the related art, a linear conductive material with a thin and elongated shape (that is, single-walled carbon nanotubes), which has excellent physical properties in terms of dispersibility, is currently used. In particular, when the linear conductive material is used alone, the electrode structure may be improved because the electrode tortuosity, which is a problem with the silicon-based negative electrode, may be simplified, and accordingly, the negative electrode conductive material has a feature capable of reducing the movement resistance of lithium ions in the electrode.

Furthermore, for additional improvement in dispersibility, an amide-based polar organic solvent (particularly NMP) other than a water dispersion using distilled water is used as a dispersion medium to facilitate maintenance of the carbon nanotube structure.

Further, when the above range is satisfied, a conductive path of a negative electrode manufactured using the negative electrode slurry in the future is secured, so that the electrode resistance is reduced, and the service life characteristics of the battery may also be improved.

In another exemplary embodiment of the present specification, the content of the single-walled carbon nanotubes may be 0.01 parts by weight or more and 1 part by weight or less based on 100 parts by weight of the solid content of the negative electrode slurry.

In still another exemplary embodiment, the single-walled carbon nanotubes may be included in a content of 0.05 parts by weight or more and 0.8 parts by weight or less, preferably 0.1 parts by weight or more and 0.7 parts by weight or less, and more preferably 0.015 parts by weight or more and 0.5 parts by weight or less, based on 100 parts by weight of the solid content of the negative electrode slurry.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present specification, the organic-based binder may be one or more selected from the group consisting of a polyvinylidene fluoride (PVdF)-based binder, a polyamideimide (PAI)-based binder, a polyimide (PI)-based binder, a polyacrylonitrile (PAN)-based binder, and a polyacrylamide (PAM)-based binder.

In the present specification, the organic-based binder may be a homopolymer or a copolymer, and when the organic-based binder is a copolymer, the copolymer may be a random copolymer, a block copolymer, an alternating copolymer, or a graft copolymer.

In an exemplary embodiment of the present specification, the organic-based binder may further include a repeating unit derived from one or more compounds selected from the group consisting of acrylic acid and hexafluoropropylene, or may further include a polyacrylic acid polymer. Examples of the organic-based binder include PVdF-AA/HFP, PAN-PAA, PAN-PAM, and the like, but are not limited thereto.

In an exemplary embodiment of the present specification, the organic solvent means a non-aqueous organic solvent, and it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In an exemplary embodiment of the present specification, the organic solvent may be N-methyl-2-pyrrolidinone (NMP).

In the present specification, by using the same type of organic solvent and dispersion medium of the conductive material, an organic system may be secured throughout the entire negative electrode slurry to help maintain the morphology of a carbon nanotube structure formed in the above-described dispersion.

In an exemplary embodiment of the present specification, the weight ratio of the negative electrode active material, the organic-based binder, and the single-walled carbon nanotubes may be 70 to 95 (wt%): 3 to 15 (wt%): 0.01 to 1 (wt%). In the present specification, a composition including the negative electrode active material, the organic-based binder, and the single-walled carbon nanotubes may be referred to as an electrode composition.

In an exemplary embodiment of the present specification, the negative electrode slurry may further include an additional conductive material, and the content of the additional conductive material may be 20 wt% or less with respect to the sum of the negative electrode active material, the organic-based binder, and the single-walled carbon nanotubes.

In another exemplary embodiment of the present specification, the content of the additional conductive material may be more than about 0 wt%, more than about 1 wt%, more than about 3 wt%, or more than about 4 wt%, or about 20 wt% or less, about 19 wt% or less, about 18 wt% or less, or about 17 wt% or less with respect to the sum (that is, the electrode composition) of the negative electrode active material, the organic-based binder, and the sinle-walled carbon nanotubes.

In the present specification, the additional conductive material has a configuration other than single-walled carbon nanotubes, and may mean at least one of a dotted conductive material; a planar conductive material; and a linear conductive material.

In the present application, the dotted conductive material may be preferably used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In the present specification, the planar conductive material may serve to improve conductivity by increasing the surface contact between silicon particles in the electrode, preferably, the negative electrode and simultaneously suppress the disconnection of the conductive path due to the volume expansion. The planar conductive material may be expressed as a plate-like conductive material or a bulk conductive material. Examples of the planar conductive material may include at least one selected from the group consisting of plate-like graphite, graphene, graphene oxide, and graphite flake, and may be preferably plate-like graphite.

In the present specification, the linear conductive material may be multi-walled carbon nanotubes as well as single-walled carbon nanotubes.

In an exemplary embodiment of the present specification, the additional conductive material may be one or more dotted conductive materials. For example, the additional conductive material may be carbon black, artificial graphite, and the like.

In another exemplary embodiment, the conductive material may be a negative electrode conductive material.

In the present specification, the negative electrode conductive material is applied to the negative electrode, and has a completely different configuration from a positive electrode conductive material applied to the positive electrode. That is, the negative electrode conductive material serves to capture a contact point between silicon-based active materials in which the volume expansion of the electrode is very large due to charging and discharging, whereas the positive electrode conductive material serves to impart partial conductivity while playing a buffer role as a cushioning role when roll-pressed, so that the negative electrode conductive material and the positive electrode conductive material have different structures and roles.

When the negative electrode slurry according to an exemplary embodiment of the present invention satisfies the above weight ratio, the phase stability is improved, and the binder and the conductive material are effectively bound to the negative electrode active material during the manufacture of an electrode, and the conductive connectivity between the active materials may be smoothly maintained.

In some cases, the type or content of solvent may be adjusted such that the viscosity of the negative electrode slurry falls within a range of 5000 cps to 6000 cps. Accordingly, when one surface or both surfaces of an electrode current collector layer is coated with the negative electrode slurry in the future, coatability and storability are excellent.

**<Negative electrode>**

An exemplary embodiment of the present specification provides a negative electrode including: a current collector layer; and a negative electrode active material layer provided on one surface or both surfaces of the current collector layer, in which the negative electrode active material layer includes any one of the above-described negative electrode slurry or a dried material thereof.

In an exemplary embodiment of the present invention, a solid content of the negative electrode slurry may satisfy 5% or more and 60% or less, preferably 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the current collector layer generally has a thickness of 1 $\mu$m to 100 $\mu$m as a negative electrode current collector layer. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, copper or stainless steel whose surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 $\mu$m or more and 100 $\mu$m or less, and the negative electrode active material layer has a thickness of 20 $\mu$m or more and 500 $\mu$m or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, as a means for providing the current collector layer with the negative electrode slurry, it is possible to use a known coating device in the related art, such as a comma coater, a gravure coater, a microgravure coater, a die coater, or a bar coater, but the means is not limited thereto.

Thereafter, a drying process may be performed, and may be performed at a temperature of 60°C to 200°C, or more preferably 100°C to 180°C, and may be performed in dry air or an inert atmosphere (for example: argon, and the like), but is not limited thereto. The thickness of the electrode (cured coating film) may be 5 $\mu$m to 300 $\mu$m, or more preferably 10 $\mu$m to 250 $\mu$m, but is not limited thereto.

### <Lithium Secondary Battery>

An exemplary embodiment of the present application provides a lithium secondary battery including: a first electrode; a second electrode; a separator interposed between the first electrode and the second electrode; and an electrolyte, in which any one of the first electrode and the second electrode is the negative electrode.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates such as ethylene carbonate and propylene carbonate may be preferably used because the cyclic carbonates have high permittivity as organic solvents of a high viscosity and thus dissociate a lithium salt well, when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^7$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

The secondary battery according to the present invention is useful for the fields of portable devices such as mobile phones, notebook-sized computers, and digital cameras and electric vehicles such as hybrid electric vehicles (HEVs), and may be preferably used as particularly, a constituent battery of a medium-sized and large-sized battery module. Therefore, the present invention also provides a medium-sized and large-sized battery module including the aforementioned lithium secondary battery as a unit battery.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

Examples. Preparation of negative electrode slurry

<Example 1>

An electrode composition was prepared by using Si with d50 = 4.5 $\mu$m as a negative electrode active material, using SWCNTs dispersed in NMP (weight ratio of dispersant : PvdF, SWCNTs: PvdF = 1 : 1) as a conductive material, using carbon black (Super C65, manufactured by TIMCAL Ltd.) and artificial graphite (SFG6L, manufactured by TIMCAL Ltd.) as an additional conductive material, using a polyamideimide (PAI)-based binder as a binder, and mixing the resulting mixture such that Si : C65 : SFG6L : SWCNT : the binder = 80 : 5 : 5 : 0.5 :10 (based on weight ratio).
A negative electrode slurry was prepared using N-methyl-2-pyrrolidinone (NMP) as a solvent, and in this case, the amount of NMP added was adjusted in consideration of coatability, viscosity, and solid content. The viscosity of the obtained negative electrode slurry was adjusted to 5000 cps to 6000 cps using a rheometer HR20 (manufactured by TA Instruments).

<Example 2>

A negative electrode slurry was prepared in the same manner as in Example 1, except that PAN-PAM (based on total binder weight, PAN : PAM = 95 : 5) was used as the binder.

<Example 3>

A negative electrode slurry was prepared in the same manner as in Example 1, except that PAN-PAA (based on total binder weight, PAN : PAA = 95 : 5) was used as the binder.

<Example 4>

A negative electrode slurry was prepared in the same manner as in Example 1, except that artificial graphite : SiC (weight ratio 85 : 15) was used as the negative electrode active material.

<Comparative Example 1>

A negative electrode slurry was prepared in the same manner as in Example 1, except that Na$^+$-substituted PAA was used as the binder and single-walled carbon nanotubes dispersed in water were used as the conductive material.

<Comparative Example 2>

A negative electrode slurry was prepared in the same manner as in Example 1, except that PAM-Na$^+$-substituted PAA was used as the binder and single-walled carbon nanotubes dispersed in water were used as the conductive material.

<Comparative Example 3>

A negative electrode slurry was prepared in the same manner as in Example 1, except that SBR-CMC (based on total binder weight, SBR : CMC = 8 : 2) was used as the binder and single-walled carbon nanotubes dispersed in water were used as the conductive material.

<Comparative Example 4>

A negative electrode slurry was prepared in the same manner as in Example 4, except that $Na^+$-substituted PAA was used as the binder and water-dispersed single-walled carbon nanotubes were used as the conductive material.

Experimental Examples.

<Experiment Example 1: Measurement of amount of $H_2$ gas generated in electrode slurry>

5 g of each of the negative electrode slurries of Examples 1 to 4 and Comparative Examples 1 to 4 were put into a pouch having a size of 9 cm x 9 cm, and the pouches were sealed, and then left to stand in a constant temperature chamber at 60°C for 24 hours. Next, the gas generated in the pouch was captured, and the generation amount of $H_2$ gas generated was quantitatively analyzed using GC/MS. The results are shown in the following Table 1.

<Experiment Example 2> Battery manufacturing and battery characteristic evaluation

A copper foil with a thickness of 18 $\mu$m was coated with each of the negative electrode slurries of Examples 1 to 4 and Comparative Examples 1 to 4 and dried, an active material layer with a thickness of 50 $\mu$m was formed on one surface of the copper foil, and the copper foil was punched into circular shapes with a diameter of 14 $\Phi$ (mm) to manufacture a test electrode (negative electrode).

A metal lithium foil with a thickness of 0.3 mm was used as a positive electrode, a porous polyethylene sheet with a thickness of 0.1 mm was used as the separator, and a product obtained by dissolving $LiPF_6$ as a lithium salt at a concentration of about 1 mol/L in a mixed solvent of ethylene carbonate (EC) and diethyl carbonate (DEC) at a volume ratio of 1:1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container.

The coin cell was charged with a constant current of 0.05 C until the voltage reached 0.01 V, and discharged with a constant current of 0.05 C until the voltage reached 1.5 V to determine the discharge capacity and initial efficiency, and thereafter, a capacity retention rate test was conducted by performing the cycle characteristics in the same voltage range as above at a constant current of 0.2 C. The experimental results are shown in the following Table 1.

[Table 1]

| Experimental Examples | Example 1 | Example 2 | Example 3 | Example 4 | Comparative Example 1 | Comparative Example 2 | Comparative Example 3 | Comparative Example 4 | Remarks |
|---|---|---|---|---|---|---|---|---|---|
| $H_2$ gas generation amount (μl) | 15 | 22 | 26 | 10 | 46,200 | 35,500 | 37,200 | 31,400 | |
| Capacity retention rate (%) | 84 | 81 | 87 | 85 | 63 | 52 | 57 | 61 | calculated based on 30 cycles |

As shown in Table 1, it can be seen that the batteries manufactured using the negative electrode slurries containing the organic-based binder and the single-walled carbon nanotubes (SWCNTs) dispersed in NMP of Examples 1 to 4 generated less hydrogen gas and had excellent cycle capacity retention rates than the batteries manufactured using the negative electrode slurries of Comparative Examples 1 to 4.

**Claims**

1. A negative electrode slurry comprising: a negative electrode active material; single-walled carbon nanotubes (SWCNTs); an organic-based binder; and an organic solvent, wherein the negative electrode slurry comprises a pre-dispersion in which the single-walled carbon nanotubes are dispersed in N-methyl-2-pyrrolidinone (NMP).

2. The negative electrode slurry of claim 1, wherein the negative electrode active material comprises one or more selected from the group consisting of a silicon-based active material and a carbon-based active material.

3. The negative electrode slurry of claim 2, wherein the silicon-based active material comprises one or more selected from the group consisting of $SiO_x$, wherein x=0, $SiO_x$, wherein 0<x<2, SiC, and a Si alloy.

4. The negative electrode slurry of claim 2, wherein the carbon-based active material comprises one or more selected from the group consisting of artificial graphite, natural graphite, hard carbon, and soft carbon.

5. The negative electrode slurry of claim 1, wherein the organic-based binder is one or more selected from the group consisting of a polyvinylidene fluoride (PVdF)-based binder, a polyamideimide (PAI)-based binder, a polyimide (PI)-based binder, a polyacrylonitrile (PAN)-based binder, and a polyacrylamide (PAM)-based binder.

6. The negative electrode slurry of claim 5, wherein the organic-based binder further comprises a repeating unit derived from one or more compounds selected from the group consisting of acrylic acid and hexafluoropropylene, or further comprises a polyacrylic acid polymer.

7. The negative electrode slurry of claim 1, wherein the organic solvent is N-methyl-2-pyrrolidinone (NMP).

8. The negative electrode slurry of claim 1, wherein a weight ratio of the negative electrode active material, the organic-based binder, and the single-walled carbon nanotubes is 70 to 95 (wt%): 3 to 15 (wt%): 0.01 to 1 (wt%).

9. The negative electrode slurry of claim 1, further comprising an additional conductive material, wherein a weight ratio of the additional conductive material is 20 wt% or less with respect to a sum of the negative electrode active material, the organic-based binder, and the single-walled carbon nanotubes.

10. A negative electrode comprising: a current collector layer; and a negative electrode active material layer provided on one surface or both surfaces of the current collector layer, wherein the negative electrode active material layer comprises the negative electrode slurry of any one of claims 1 to 9 or a dried material thereof.

11. A lithium secondary battery comprising:

    a first electrode;
    a second electrode;
    a separator interposed between the first electrode and the second electrode; and
    an electrolyte,
    wherein any one of the first electrode and the second electrode is the negative electrode according to claim 10.

| INTERNATIONAL SEARCH REPORT | International application No. |
| --- | --- |
| | **PCT/KR2023/020232** |

### A. CLASSIFICATION OF SUBJECT MATTER

**H01M 4/134**(2010.01)i; **H01M 4/62**(2006.01)i; **H01M 4/38**(2006.01)i; **H01M 4/48**(2010.01)i; **H01M 4/587**(2010.01)i; **H01M 4/583**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/134(2010.01); C01B 31/02(2006.01); C01B 32/174(2017.01); C08J 5/18(2006.01); H01G 11/24(2013.01); H01G 11/36(2013.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 슬러리 (anode slurry), 단일벽 탄소나노튜브 (Single-Walled Carbon NanoTube, SWCNT), 분산액 (dispersions), N-메틸-2-피롤리돈 (N-methyl-2-pyrrolidone, NMP), 유기계 바인더 (organic binder)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0023760 A (LG CHEM, LTD.) 04 March 2021 (2021-03-04)<br>See abstract; and paragraphs [0043], [0048], [0087]-[0089], [0091], [0094]-[0095], [0098]-[0100] and [0107]-[0117]. | 1-11 |
| Y | US 2019-0185632 A1 (GENERAL NANO LLC.) 20 June 2019 (2019-06-20)<br>See abstract; paragraphs [0027] and [0062]; and claims 1, 9-11 and 13-14. | 1-11 |
| A | KR 10-2019-0086509 A (NANOCOMP TECHNOLOGIES, INC.) 22 July 2019 (2019-07-22)<br>See entire document. | 1-11 |
| A | KR 10-2015-0018088 A (OCI COMPANY LTD.) 23 February 2015 (2015-02-23)<br>See entire document. | 1-11 |

☑ Further documents are listed in the continuation of Box C.    ☑ See patent family annex.

| | |
| --- | --- |
| *    Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**01 April 2024** | Date of mailing of the international search report<br><br>**01 April 2024** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/020232**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0094127 A (HOSEO UNIVERSITY ACADEMIC COOPERATION FOUNDATION) 09 August 2016 (2016-08-09)<br>    See entire document. | 1-11 |

Form PCT/ISA/210 (second sheet) (July 2022)

**INTERNATIONAL SEARCH REPORT**
Information on patent family members

International application No.

**PCT/KR2023/020232**

| Patent document cited in search report | | | Publication date (day/month/year) | Patent family member(s) | | | Publication date (day/month/year) |
|---|---|---|---|---|---|---|---|
| KR | 10-2021-0023760 | A | 04 March 2021 | CN | 113597695 | A | 02 November 2021 |
| | | | | EP | 3936475 | A1 | 12 January 2022 |
| | | | | EP | 3936475 | B1 | 07 February 2024 |
| | | | | JP | 2022-525330 | A | 12 May 2022 |
| | | | | JP | 7180010 | B2 | 29 November 2022 |
| | | | | KR | 10-2613804 | B1 | 15 December 2023 |
| | | | | US | 2022-0166027 | A1 | 26 May 2022 |
| | | | | WO | 2021-034145 | A1 | 25 February 2021 |
| US | 2019-0185632 | A1 | 20 June 2019 | CN | 109563285 | A | 02 April 2019 |
| | | | | EP | 3494167 | A1 | 12 June 2019 |
| | | | | JP | 2019-527641 | A | 03 October 2019 |
| | | | | WO | 2018-027092 | A1 | 08 February 2018 |
| KR | 10-2019-0086509 | A | 22 July 2019 | CN | 110234808 | A | 13 September 2019 |
| | | | | CN | 110234808 | B | 08 February 2022 |
| | | | | EP | 3541992 | A1 | 25 September 2019 |
| | | | | EP | 3541992 | B1 | 22 December 2021 |
| | | | | ES | 2908259 | T3 | 28 April 2022 |
| | | | | JP | 2020-507195 | A | 05 March 2020 |
| | | | | JP | 2022-078165 | A | 24 May 2022 |
| | | | | JP | 7197497 | B2 | 27 December 2022 |
| | | | | JP | 7397110 | B2 | 12 December 2023 |
| | | | | KR | 10-2021-0158424 | A | 30 December 2021 |
| | | | | KR | 10-2461423 | B1 | 03 November 2022 |
| | | | | KR | 10-2470300 | B1 | 25 November 2022 |
| | | | | US | 10581082 | B2 | 03 March 2020 |
| | | | | US | 11387460 | B2 | 12 July 2022 |
| | | | | US | 2018-0138514 | A1 | 17 May 2018 |
| | | | | US | 2020-0161661 | A1 | 21 May 2020 |
| | | | | WO | 2018-093603 | A1 | 24 May 2018 |
| KR | 10-2015-0018088 | A | 23 February 2015 | CN | 104347860 | A | 11 February 2015 |
| | | | | CN | 104347860 | B | 26 April 2017 |
| | | | | JP | 2015-037074 | A | 23 February 2015 |
| | | | | JP | 5918289 | B2 | 18 May 2016 |
| | | | | KR | 10-1496309 | B1 | 26 February 2015 |
| | | | | US | 2015-0044570 | A1 | 12 February 2015 |
| | | | | US | 9673449 | B2 | 06 June 2017 |
| KR | 10-2016-0094127 | A | 09 August 2016 | | None | | |

Form PCT/ISA/210 (patent family annex) (July 2022)

**REFERENCES CITED IN THE DESCRIPTION**

**Patent documents cited in the description**

- KR 1020220183268